# EUROPEAN PATENT APPLICATION

(11) **EP 2 348 466 A2**
(43) Date of publication of application: **27.07.2011**
(21) Application number: 10193272.1
(22) Date of filing: 01.12.2010
(51) Int. Cl.: G06Q 10/00

(54) **Information terminal, information processing method and computer program**

(30) Priority: 18.12.2009 JP 2009287250
(71) Applicant: Fujitsu Limited, Kawasaki-shi, Kanagawa 211-8588 (JP)
(72) Inventor: Akama, Katsuaki, Kanagawa 211-8588 (JP); Nakayama, Waka, Kanagawa 211-8588 (JP)
(74) Representative: HOFFMANN EITLE

(57) **Abstract**

An information terminal includes: a first controlling unit which controls a displaying unit to display a received mail icon indicating a received mail; a second controlling unit which controls the displaying unit to display a return mail icon indicating a return mail to the received mail; and a transmitting unit which transmits, when an operation of selecting a display area at which the return mail icon is displayed is performed, the return mail indicated by the return mail icon on which the operation is performed, to a source of the received mail indicated by the received mail icon.

## Description

### FIELD

The present invention relates to an information terminal such as a mobile phone, an information processing method in such an information terminal, and a computer program for operating such an information terminal.

### BACKGROUND

In an email system adopted in an information terminal, such as a mobile phone and a personal digital assistant (PDA), if the user wants to send a reply to a mail received on the information terminal, the user usually creates the entire return mail. However, in many cases, the user thinks it troublesome to create the entire return mail. Thus, there has been suggested an information terminal in which a predetermined fixed-phrase message (e.g. an affirmative message and a negative message) is prepared in advance and the fixed-phrase message is transmitted as the return mail.
Patent document 1: Japanese Patent Application Laid Open No. 2000-3316

### SUMMARY

However, although the user does not have to create the entire return mail, there is still such a technical problem that the user has many operations for transmitting the return mail. For example, the user needs to (i) display a return mail list, (ii) use an operation button, such as an arrow key, to select a mail which is a return target from the return mail list, (iii) use the operation button to select a return fixed-phrase message, (iv) use an operation button, such as a keyboard, if necessary, to edit the selected fixed-phrase message, and (v) finally press a send button to transmit the fixed-phrase message as the return mail. Therefore, the operations for transmitting the return mail take time. In particular, such a problem becomes more remarkable as the number of the received mails and the number of the fixed-phrase messages increase.

The subject to be solved by one aspect of the embodiment discussed herein includes the above as one example. It is therefore an object of the present invention to provide an information terminal which allows a user to reply to a mail while reducing the user's operations, an information processing method in the information terminal, and a computer program for operating the information terminal.

According to an aspect of the embodiment, an information terminal includes: a first controlling unit; a second controlling unit; and a transmitting unit.

The first controlling unit controls a displaying unit to display a received mail icon on the displaying unit. The received mail icon is an icon (in other words, a graphic user interface (GUI) display element) indicating a received mail. Incidentally, the received mail icon has arbitrary display content, as long as the received mail icon shows the received mail to a user. As one example, the received mail icon indicates the presence or absence of the received mail, or the content (e.g. a source, a title, a received mail body, and the like) of the received mail.

The second controlling unit controls the displaying unit to display a return mail icon on the displaying unit. The return mail icon is an icon indicating a return mail prepared in advance as a fixed phrase, for example. Incidentally, the return mail icon has arbitrary display content, as long as the return mail icon shows the return mail to the user. As one example, the return mail icon indicates the presence or absence of the return mail, or the content (e.g. a return mail body prepared as the fixed phrase, and the like, for example) of the return mail.

The transmitting unit transmits the return mail indicated by the return mail icon, to the source of the received mail indicated by the received mail icon. Preferably, when an operation of selecting a display area at which the return mail icon is displayed is performed, the transmitting unit transmits the return mail indicated by the return mail icon on which the operation is performed (i.e. which is selected).

According to an another aspect of the embodiment, an information processing method executed by an information terminal, includes: a following process. In the process, the same operation as that of the first controlling unit described above, the same operation as that of the second controlling unit described above, and the same operation as that of the transmitting unit described above are performed.

According to an another aspect of the embodiment, a computer program (or a computer readable recording medium recording a computer program) for operating an information terminal to make the information terminal perform a above process in the aforementioned information processing method.

### BRIEF DESCRIPTION OF THE DRAWINGS

FIG. 1 is a block diagram illustrating the entire structure of a mobile phone in an embodiment;
FIG. 2 is a flowchart illustrating a flow of operations of the mobile phone in the embodiment;
FIG. 3 is a data structure view illustrating one example of return mail information;
FIG. 4 is a plan view illustrating one example of the display screen of a display on which received mail icons and return mail icons are displayed;
FIGs. 5 are plan views illustrating one example of a user's specific operation on a touch panel and the content of a return mail in a case where the operation is performed;
FIGs. 6 are plan views illustrating one example of the display aspect of the display in a case where one return mail is received; and
FIG. 7 is a data structure view illustrating return mail information in a modified example.

### DESCRIPTION OF EMBODIMENTS

Hereinafter, the embodiment will be explained with reference to the drawings. Incidentally, the following explanation will be given by using a mobile phone as one example of the information terminal. However, the configuration described later may be adopted not only to the mobile phone but also to various information terminals having a mail transmission and reception function (e.g. a PDA, a mini-personal computer, a laptop computer, a desktop computer, and the like).

### (1) Entire Structure

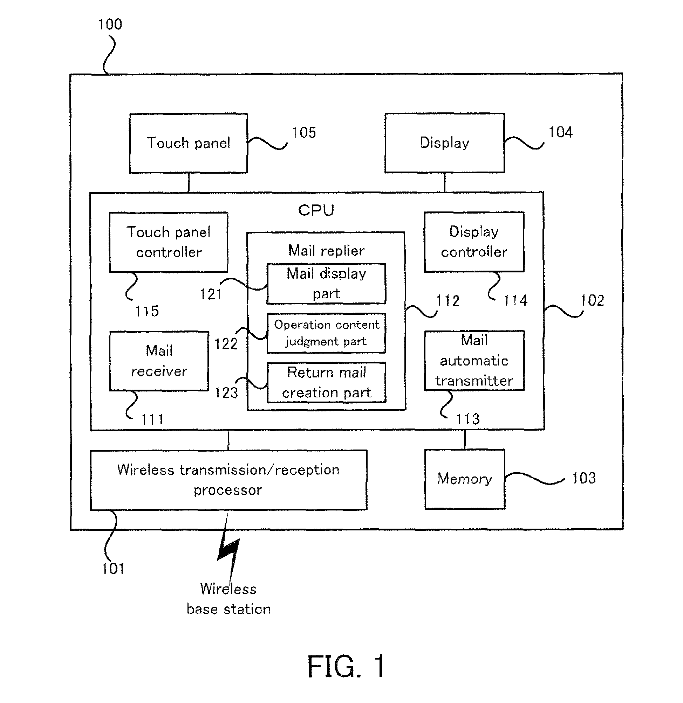

With reference to FIG. 1, the entire structure of a mobile phone 100 in this embodiment will be explained. FIG. 1 is a block diagram illustrating the entire structure of the mobile phone 100 in the embodiment. Incidentally, FIG. 1 selectively clarifies the constituents necessary for the explanation of the mobile phone 100 in the embodiment. Thus, obviously, the mobile phone 100 in the embodiment may includes not-illustrated other constituents necessary for the function as the mobile phone, as occasion demands.

As illustrated in FIG. 1, the mobile phone 100 includes a wireless transmission / reception processor 101, a CPU 102, a memory 103, a display 104, and a touch panel 105. Incidentally, the following explanation states an example in which user's operations are received by the touch panel 105, however, the reception of the user's operation is not limited to this aspect. For example, various operations may be received by displacing a cursor displayed on the display 104 with an operating device or an operation button, such as an arrow key, a trackball, and a keyboard.

The wireless transmission / reception processor 101 transmits data to a not-illustrated wireless base station by using wireless radio waves. The wireless transmission / reception processor 101 receives the data transmitted from the not-illustrated wireless base station by using the wireless radio waves. Thus, the wireless transmission / reception processor 101 includes a baseband processing circuit for performing a baseband process including a data coding (e.g. error correction coding of a convolutional code, a turbo code, or the like) process and a data decoding process or the like; a modulation circuit for performing a modulation process such as QPSK modulation and 16QAM modulation; a demodulation circuit for performing a demodulation process; a RF circuit for adjusting a transmission power or a reception power; an antenna for transmitting and receiving radio waves; and the like.

The CPU 102 controls all the operations of the mobile phone 100. The CPU 102 operates on the basis of predetermined firmware stored in the memory 103 or the like.

In particular, the CPU 102 includes, as logical or functional processing blocks constructed therein, a mail receiver 111, a mail replier 112 which constitutes one specific example of the aforementioned "transmitting unit", a mail automatic transmitter 113 which constitutes one specific example of the aforementioned "transmitting unit", a display controller 14 which constitutes one specific example of the aforementioned "first controlling unit" and the aforementioned "second controlling unit", and a touch panel controller 115. The processing blocks may be realized, for example, as the operations of a partial program of the firmware which defines the operations of the CPU 102, or as the operations of a program independent of the firmware. Alternatively, the mail receiver 111, the mail replier 112, the mail automatic transmitter 113, the display controller 114, and the touch panel controller 115 may be realized as one circuit independent of the CPU 102.

The mail receiver 111 controls the reception of the mail on the mobile phone 100. For example, the mail receiver 111 receives the mail through the wireless transmission / reception part 101. Hereinafter, the mail received by the mobile phone 100 is referred to as a "received mail", as occasion demands. Moreover, the mail receiver 111 forwards the received mail to the mail replier 112 in order to makes the mail replier 112 create a return mail to the received mail.

The mail replier 112 controls the creation of the return mail to the received mail, as detailed later. In particular, the mail replier 112 includes, as logical or functional processing blocks constructed therein, a mail display part 121, an operation content judgment part 122, and a return mail creation part 123. The mail display part 121 displays a received mail icon 310 indicating the received mail on the display 104. The mail display part 121 displays a return mail icon 320 indicating the return mail on the display 104. The operation content judgment part 122 judges whether or not the operation content performed by the user on the touch panel 105 is predetermined operation content, on the basis of the operation content detected on the touch panel controller 115. The return mail creation part 123 creates the return mail in accordance with the judgment result of the operation content judgment part 122.

The mail automatic transmitter 113 controls the transmission of the return mail created on the mail replier 112. For example, the mail automatic transmitter 113 transmits the return mail through the wireless transmission /reception processor 101.

The display controller 114 controls display on the display 104. For example, the display controller 114 controls the display 104 to display the received mail, which is forwarded from the mail receiver 111, on the display 104, as the received mail icon 310. For example, the display controller 114 controls the display 104 to display the return mail, which is forwarded from the mail replier 112, on the display 104, as the return mail icon 320.

The touch panel controller 115 detects the operation content (e.g. a coordinate position at which the operation is performed, or the like) on the touch panel 105. The detected operation content is forwarded to the mail replier 112.

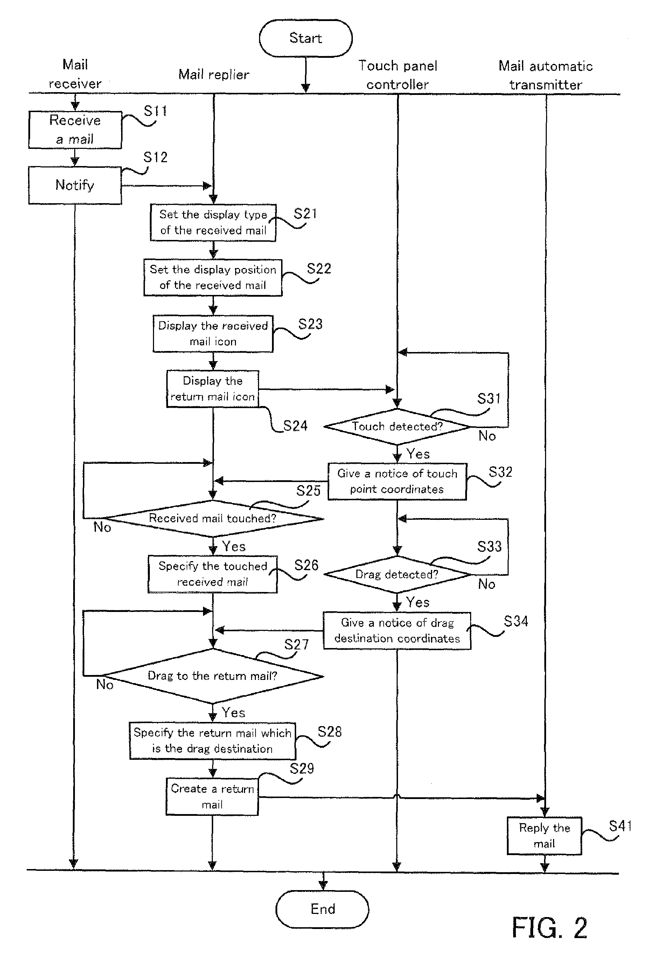

Incidentally, the operations performed by the CPU 102 (in other words, the processing blocks within the CPU 102) will be detailed later (refer to FIG. 2 and the like). Therefore, here, only the summary of the operations performed by the CPU 102 (in other words, the processing blocks within the CPU 102) will be explained, and the detailed explanation thereof will be omitted.

The memory 103 includes a memory area to temporarily store therein the data used within the mobile phone 100. Moreover, the memory 103 may include a memory area or the like to store a program (i.e. firmware) for performing the operations as the mobile phone 100. As the memory 103, for example, a semiconductor memory, such as a random access memory (RAM), and other various recording media are listed as one example.

The display 104 displays a display object (e.g. the received mail icon 310 and the return mail icon 320 described later, or the like), under the control of the display controller 114. As the display 104, for example, a liquid crystal display, an organic EL display, an inorganic EL display, displays which adopt other various methods, and the like are listed as one example.

The touch panel 105 senses information about the screen position of a point or an area touched by the user (or an operation tool such as a pen which is referred to as a stylus or the like). The sensed information about the screen position is forwarded to the touch panel controller 115. The touch panel 105 may adopt an arbitrary method. As one example, the touch panel 105 may adopt a resistance film method, an infrared method, an electromagnetic induction method, and a capacitance method. Moreover, the touch panel 105 may be unified with the display 104 or be separated from the display 104. If the touch panel 105 is separated from the display 104, the touch panel 105 may be disposed on the display surface of the display 104.

### (2) Explanation of Operation

With reference to FIG. 2, the operations of the mobile phone 100 in the embodiment (in particular, the operation of creating the return mail) will be explained. FIG. 2 is a flowchart illustrated a flow of the operations of the mobile phone 100 in the embodiment.

As illustrated in FIG. 2, the mail receiver 111 receives a received mail transmitted from another mobile phone through a wireless base station or the like (step S11). Then, the mail receiver 111 notifies the mail replier 112 of the reception of the received mail (step S12). At this time, the mail receiver 111 also notifies the mail receiver 112 of information indicating the received mail (e.g. a source address of the received mail, a title of the received mail, a body text of the received mail, and the like).

Then, the mail replier 112 (in particular, the mail display part 121 included in the mail replier 112) sets the display type of the received mail, which is to be displayed on the display 104, on the basis of the notice from the mail receiver 111 (step S21). More specifically, the mail display part 121 sets, as the display type of the received mail, whether or not a plurality of received mails are displayed as individual received mail icons 310, whether or not a plurality of received mails are collectively displayed as one received mail icon 310, whether or not the source address of the received mail is displayed, whether or not the title of the received mail is displayed, and whether or not a part or all of the body text of the received mail is displayed.

Incidentally, the setting of the display type of the received mail may be performed by the user in advance. In this case, the mail display part 121 sets the display type of the received mail by reading the content of the setting performed in advance by the user. Alternatively, the setting of the display type of the received mail may be automatically performed by the operation of the mail display part 121. For example, if the number of the received mails is relatively large, it is predicted that the received mail icon 310 indicating each received mail is to be reduced in size. Thus, the mail display part 121 performs the setting that the plurality of received mails are correctively displayed as one received mail icon 310 or the setting that only the source address and the title of the received mail are displayed (in other words, a part or all of the body text of the received mail is not displayed). For example, if the number of the received mails is relatively small, it is predicted that the received mail icon 310 indicating each received mail can be increased in size. Thus, the mail display part 121 performs the setting that the plurality of received mails are displayed as the individual received mail icons 310 or the setting that a part or all of the body text of the received mail is displayed in addition to the source address and the title of the received mail.

Then, the mail replier 112 (in particular, the mail display part 121 included in the mail replier 112) sets a display position (i.e. a display position on the display 104) at which the received mail icon 310 indicating the received mail is displayed (step S22). More specifically, the mail display part 121 sets the display position of the received mail icon 310 so that the received mail, which is received in the step S11, can be displayed on the display 104 as the received mail icon 310 for specifying the display type, which is set in the step S21. At this time, the mail display part 121 may also set the display size of the received mail icon 310.

Then, the mail replier 112 (in particular, the mail display part 121 included in the mail replier 112) gives an instruction to the display controller 114 so that the received mail icon 310 indicating the received mail is displayed on the display 104. Specifically, the mail display part 121 notifies the display controller 114 of information indicating the display type of the received mail set in the step S21, together with information indicating the display position (moreover, the display size) set in the step S22.

As a result, the display controller 114 displays the received mail icon 310 for specifying the display type of the received mail set in the step S21, on the display 104 (step S23). Specifically, the display controller 114 displays the received mail icon 310 in a predetermined shape, which represents at least one of the source address of the received mail, the title of the received mail, and a part or all of the body text of the received mail, for each received mail or collectively for the plurality of the received mails.

Then, the mail replier 112 (in particular, the mail display part 121 included in the mail replier 112) gives an instruction to the display controller 114 so that the return mail icon 320 indicating the return mail to the received mail (e.g. indicating a body text of the return mail) is displayed on the display 104. Specifically, the mail display part 121 extracts necessary return mail information from return mail information stored in advance in the memory 103 or the like. Then, the mail display part 121 notifies the display controller 114 of the extracted return mail information.

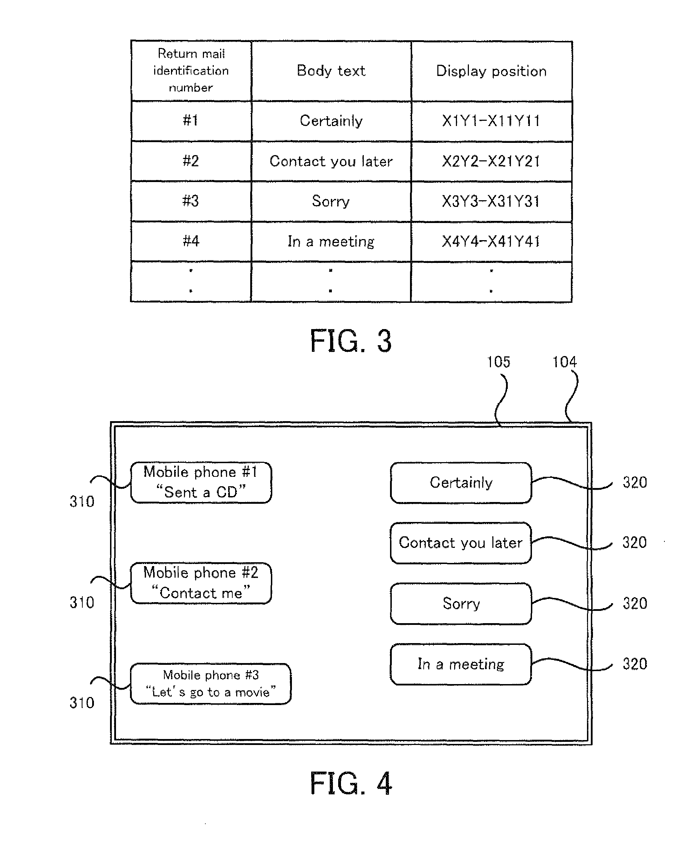

Now, with reference to FIG. 3, the return mail information will be explained. FIG. 3 is a data structure view illustrating one example of the return mail information.

As illustrated in FIG. 3, the return mail information has such a data structure that one record includes a return mail identification number for distinguishing the return mail, the body text of the return mail, and the display position of the return mail icon 320. FIG. 3 discloses such an example that a return mail whose body text is "Certainly" and whose display position of the return mail icon 320 is "X1Y1-X11Y11" is a return mail whose return mail identification number is "#1". Moreover, FIG. 3 discloses such an example that a return mail whose body text is "Contact you later" and whose display position of the return mail icon 320 is "X2Y2-X21Y21" is a return mail whose return mail identification number is "#2". Moreover, FIG. 3 discloses such an example that a return mail whose body text is "Sorry" and whose display position of the return mail icon 320 is "X3Y3-X31Y31" is a return mail whose return mail identification number is "#3". Moreover, FIG. 3 discloses such an example that a return mail whose body text is "In a meeting" and whose display position of the return mail icon 320 is "X4Y4-X41Y41" is a return mail whose return mail identification number of "#4".

Such return mail information is preferably stored in advance in the memory 103; however, it may be constructed such that a record is added by the user, as occasion demands. For example, a record indicating a return mail whose body text is "Confirmed the mail", whose display position of the return mail icon 320 is "X5Y5-X51Y51", and whose return mail identification number is "#5" may be also added to the return mail information illustrated in FIG. 3. Moreover, the display position of the return mail icon 320 may be set in advance, or may be set (in other words, obtained) at each time of the display, as in the received mail icon 310.

In FIG. 2 again, the display controller 114, which is notified of the return mail information, displays the return mail icon 320 indicating the return mail on the display 104 (step S24). Specifically, the display controller 114 displays the return mail icon 320 in a predetermined shape, which represents a part or all of the body text of the return mail, for each return mail.

Now, with reference to FIG. 4, an explanation will be given on an aspect of displaying the received mail icon 310 and the return mail icon 320. FIG. 4 is a plan view illustrating one example of the display screen of the display 104 on which the received mail icons 310 and the return mail icons 320 are displayed.

FIG. 4 illustrates an example in which a received mail icon 310 indicating a received mail whose title is "Sent a CD" and which is transmitted from a mobile phone #1, a received mail icon 310 indicating a received mail whose title is "Contact me" and which is transmitted from a mobile phone #2, and a received mail icon 310 indicating a received mail whose title is "Let's go to a movie" and which is transmitted from a mobile phone #3 are displayed on the display 104. Moreover, Fig. 4 illustrates an example in which a return mail icon 320 indicating a return mail whose body text is "Certainly", a return mail icon 320 indicating a return mail whose body text is "Contact you later", a return mail icon 320 indicating a return mail whose body text is "Sorry", and a return mail icon 320 indicating a return mail whose body text is "In a meeting" are displayed on the display 104.

Incidentally, the shape, size, and the like of the received mail icons 310 and the return mail icons 320 illustrated in FIG. 4 are merely one example, and the icons may have other shapes and sizes. In other words, the received mail icons 310 and the return mail icons 320 may have arbitrary shapes and sizes, as long as the received mail icons 310 appropriately indicates the received mails and the return mail icons 320 appropriately indicates the return mails,.

In FIG. 2 again, then, the touch panel controller 115 judges whether or not the user touches the touch panel 105 (step S31). In other words, the touch panel controller 115 judges whether or not the user's operation (e.g. a touch operation or the like) is performed on the touch panel 105.

As a result of the judgment in the step S31, if it is judged that the user does not touch the touch panel 105 (the step S31:No), the touch panel controller 115 continues the judgment operation in the step S31.

On the other hand, as a result of the judgment in the step S31, if it is judged that the user touches the touch panel 105 (the step S31:Yes), the touch panel controller 115 notifies the mail replier 112 of position coordinates (touch point coordinates) for specifying a point or a display area on the touch panel 105 touched by the user (step S32).

Then, the mail replier 112 (in particular, the operation content judgment part 122 included in the mail replier 112) judges whether or not the user touches the received mail icon 310 on the basis of the touch point coordinates which is notified in the step S32 (step S25). More specifically, the operation content judgment part 122 judges whether or not the touch point coordinates, which is notified in the step S32, match the coordinates of the display position of the received mail icon 310. If the touch point coordinates, which is notified in the step S32, match the coordinates of the display position of the received mail icon 310, it may be judged that the user touches the received mail icon 310. On the other hand, if the touch point coordinates, which is notified in the step S32, do not match the coordinates of the display position of the received mail icon 310, it may be judged that the user does not touch the received mail icon 310.

As a result of the judgment in the step S25, if it is judged that the user does not touch the received mail icon 310 (the step S25: No), the operation content judgment part 122 continues the judgment operation in the step S25,

On the other hand, as a result of the judgment in the step S25, if it is judged that the user touches the received mail icon 310 (the step S25: Yes), the operation content judgment part 122 specifies the received mail indicated by the received mail icon 310 touched by the user (step S26). In this case, the operation content judgment part 122 forwards information indicating the specified received mail (e.g. the source address of the received mail, the title of the received mail, the body text of the received mail, and the like) to the return mail creation part 123.

Then, the touch panel controller 115 judges whether or not the user performs a drag operation on the touch panel 105 (step S33). In other words, the touch panel controller 115 judges whether or not the user performs the drag operation which starts from the touch point coordinates, which is notified in the step S32, on the touch panel 105.

As a result of the judgment in the step S33, if it is judged that the user does not perform the drag operation on the touch panel 105 (the step S33: No), the touch panel controller 115 continues the judgment operation in the step S33. Alternatively, the operational flow may return to the step S31, and thus the touch panel controller 115 may continue the judgment operation in the step S31.

On the other hand, as a result of the judgment in the step S33, if it is judged that the user performs the drag operation on the touch panel 105 (the step S33: Yes), the touch panel controller 115 notifies the mail replier 112 of position coordinates (or drag destination coordinates) for specifying a point or a display area on the touch panel 105 corresponding to the destination (e.g. end point) of the drag operation (step S34).

Then, the mail replier 112 (in particular, the operation content judgment part 122 included in the mail replier 112) judges whether or not the user performs the drag operation toward the return mail icon 320, on the basis of the drag destination coordinates, which is notified in the step S34 (step S27). More specifically, the operation content judgment part 122 judges whether or not the drag destination coordinates, which is notified in the step S34, match the coordinates of the display position of the return mail icon 320. If the drag destination coordinates, which is notified in the step S34, match the coordinates of the display position of the return mail icon 320, it may be judged that the user performs the drag operation toward the return mail icon 320. On the other hand, if the drag destination coordinates, which is notified in the step S34, do not match the coordinates of the display position of the return mail icon 320, it may be judged that the user does not perform the drag operation toward the return mail icon 320.

As a result of the judgment in the step S27, if it is judged that the user does not perform the drag operation toward the return mail icon 320 (the step S27, No), the operation content judgment part 122 continues the judgment operation in the step S27. Alternatively, the operational flow may return to the step S25, and thus, the operation content judgment part 122 may continue the judgment operation in the step S25.

On the other hand, as a result of the judgment in the step S27, if it is judged that the user performs the drag operation toward the return mail icon 320 (the step S27: Yes), the operation content judgment part 122 specifies the return mail indicated by the return mail icon 320 which is the destination of the drag operation (step S28). In this case, the operation content judgment part 122 forwards information indicating the specified return mail (e.g. the body text and the like of the return mail) to the return mail creation part 123.

Then, the mail replier 112 (in particular, the return mail creation part 123 included in the mail replier 112) creates a return mail whose destination address is the source address of the received address specified in the step S26 and whose body text is the body text of the return mail specified in the step S28 (step S29). Then, the mail replier 112 forwards the created return mail to the mail automatic transmitter 113. As a result, the mail automatic transmitter 113 transmits the return mail created in the step S29 (step S41).

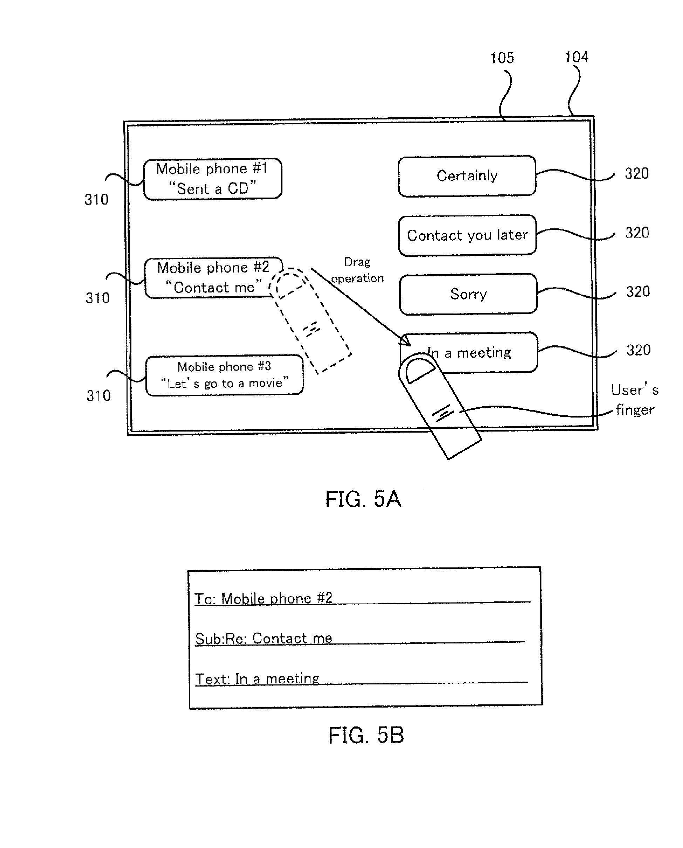

Now, with reference to FIGs. 5, an explanation will be given on the user's specific operation on the touch panel 105 and the content of the return mail in a case where the operation is performed. Fig. 5 are plan views illustrating one example of the user's specific operation on the touch panel 105 and the content of the return mail in a case where the operation is performed.

FIG. 5A illustrates an example in which the same received mail icons 310 and the same return mail icons 320 as those in the display example illustrated in FIG. 4 are displayed. With respect to such a display screen, as illustrated in FIG. 5A, it is assumed (i) that the user touches the received mail icon 310 indicating the received mail whose title is "Contact me" and which is transmitted from the mobile phone #2 and (ii) that the user performs the drag operation, wherein the drag operation starts from the received mail icon 310 indicating the received mail whose title is "Contact me" and whish is transmitted from the mobile phone #2 and the drag operation ends at the return mail icon 320 indicating the return mail whose body text is "In a meeting".

In this case, as illustrated in FIG. 5B, the mail creation part 123 included in the mail replier 112 creates a return mail (i) having the address of the mobile phone #2 as the destination address, (ii) having a title of "Re: Contact me", and (iii) having a body text of "Contact me". Then, the mail automatic transmitter 113 transmits such a return mail to the mobile phone #2.

As explained above, according to the mobile phone 100 in the embodiment, the user can transmit the return mail indicated by the return mail icon 320 to the source address of the received mail indicated by the received mail icon 310, by performing the operations on the touch panel 105 on which the received mail icon 310 and the return mail icon 320 are displayed. Thus, the user does not perform many operations using the operation button, such as an arrow key and a keyboard, in order to create and transmit the return mail. Therefore, it is possible to reduce the user's operations for the transmission of the return mail.

In particular, by performing the drag operation which starts from one received mail icon 310 and which ends at one return mail icon 320, the return mail indicated by the return mail icon 320 can be transmitted to the source address of received mail indicated by the received mail icon 310. Therefore, the user can transmit the return mail by the intuitive operations while reducing the user's operations for the transmission of the return mail. Therefore, it is possible to improve the user's operability.

Moreover, even if the plurality of received mails are received, it is possible to transmit the return mail to the source address of the received mail indicated by one received mail icon 310 by performing the drag operation which starts from the one received mail icon 310 out of the plurality of received mail icons 310. In other words, by repeating one drag operation for each of the plurality of received mail icons 310 indicating the plurality of received mails, it is possible to relatively easily transmit the return mails to all the received mails. Therefore, it no longer leads to a massive increase in the operation amount associated with the display of the plurality of received mail icons 310.

In the same manner, even if the plurality of return mail icons 320 are displayed, it is possible to transmit the return mail indicated by one return mail icon 320 by performing the drag operation which ends at the one return mail icon 320 out of the plurality of return mail icons 320. Therefore, it no longer leads to a massive increase in the operation amount associated with the display of the plurality of return mail icons 320.

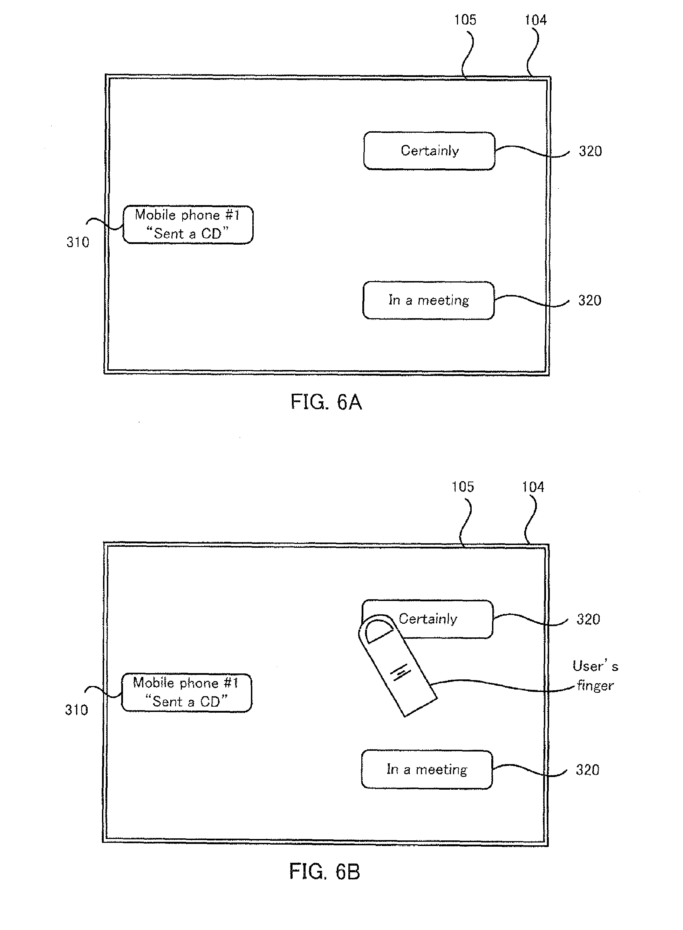

Incidentally, the aforementioned example exemplifies the operations in a case the plurality of received mails are received. However, the same operations may be performed even in a case where one received mail is received. Now, with reference to FIGS. 6, an explanation will be given on an example in the case where one return mail is received. FIGs. 6 are plan views illustrating one example of the display aspect of the display 104 in the case where one return mail is received.

As illustrated in FIGs. 6, if one received mail is received, the mail display part 121 included in the mail replier 112 displays one received mail icon 310 indicating the one received mail, on the display 104. In this case, at a time point at which the user touches one of the plurality of return mail icons 320, the return mail indicated by the one return mail icon 320 touched by the user may be transmitted to the source address of the received mail indicated by the one received mail icon 320. In other words, the return mail may be transmitted by judging which return mail icon 320 is touched by the user, instead of the operations of judging the start point and end point of the drag operation (the operations in the steps S25 to S28 and the steps S31 to S34 in FIG. 2).

By virtue of such construction, one touch operation allows the return mail to be transmitted. Therefore, it is possible to further reduce the user's operations for the transmission of the return mail.

Incidentally, even if the plurality of received mails are received, one received mail icon 310 (e.g. a first received mail icon 310) indicating one of the plurality of received mails may be selectively displayed, in addition to or instead of displaying the plurality of received mail icons 310 indicating the plurality of received mails. In this case, after the transmission of the return mail is completed with respect to one received mail indicated by the displayed first received mail icon 310, one received mail icon 310 indicating a next received mail (e.g. a second received mail icon 310) may be displayed. By virtue of such construction, even if the plurality of received mails are received, it is possible to relatively easily transmit the return mails to all the received mails, by repeating one touch operation for each of the plurality of received mails. Therefore, it is possible to further reduce the user's operations for the transmission of the return mail.

### (3) Modified Example

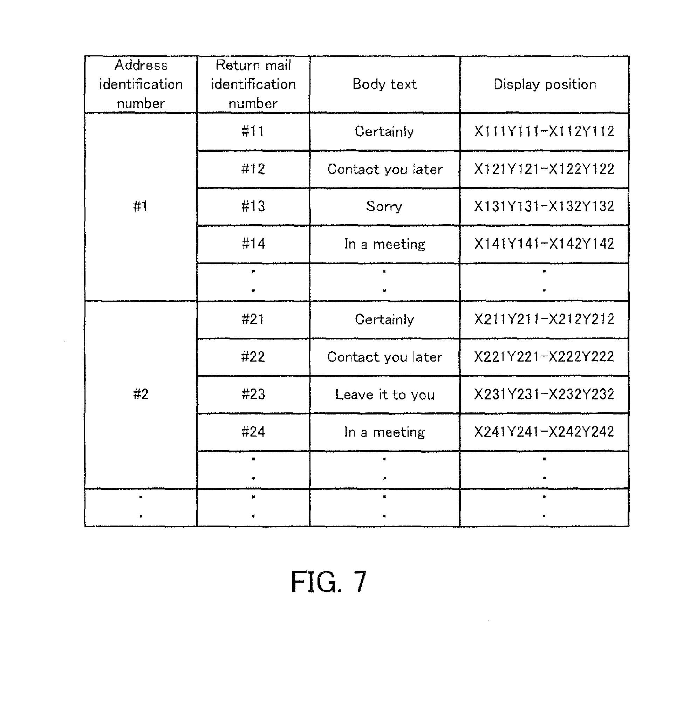

Next, a modified example of the mobile phone 100 in the embodiment will be explained. The aforementioned example illustrates an example in which the return mail information is commonly used for the plurality of source addresses even if there are the plurality of source addresses of the received mails. However, in the modified example, if there are the plurality of source addresses of the received mails, the return mail information is individually prepared for each of the plurality of source addresses of the received mails. Such return mail information will be explained with reference to FIG. 7. FIG. 7 is a data structure view illustrating such return mail information.

As illustrated in FIG. 7, the return mail information in the modified example has such a data structure that one record includes the aforementioned return mail identification number, body text, and display position, and an address identification number for distinguishing the source address of the received mail.

FIG. 7 discloses such an example that (i) a return mail whose return mail identification number is "#L1.", whose body text is "Certainly", and whose display position of the return mail icon 320 is "X111Y111-X112Y112", (ii) a return mail whose return mail identification number is "#12", whose body text is "Contact you later", and whose display position of the return mail icon 320 is "X121Y121-X122Y122", (iii) a return mail whose return mail identification number is "#13", whose body text is "Sorry", and whose display position of the return mail icon 320 is "X131Y131-X132Y132", and (iv) a return mail whose return mail identification number is "#14", whose body text is "In a meeting", and whose display position of the return mail icon 320 is "X141Y141-X142Y142" are prepared for a source address whose address identification number is "#1". Moreover, FIG. 7 discloses such an example that (i) a return mail whose return mail identification number is "#21", whose body text is "Certainly", and whose display position of the return mail icon 320 is "X211Y211-X212Y212", (ii) a return mail whose return mail identification number is "#22", whose body text is "Contact you later", and whose display position of the return mail icon 320 is "X221Y221-X222Y222", (iii) a return mail whose return mail identification number is "#23", whose body text is "Leave it to you", and whose display position of the return mail icon 320 is "X231Y231-X232Y232", and (iv) a return mail whose return mail identification number is "#24", whose body text is "In a meeting", and whose display position of the return mail icon 320 is "X241Y241-X242Y242" are prepared for a source address with an address identification number of "#2".

In the modified example, the mail display part 121 included in the mail replier 112 displays the return mail icon 320 on the basis of the record whose address identification number is "#1" if displaying the received mail icon 310 indicating the received mail whose source address is "#1". In the same manner, the mail display part 121 included in the mail replier 112 displays the return mail icon 320 on the basis of the record whose address identification number is "#2" if displaying the received mail icon 310 indicating the received mail whose source address is "#2".

By this, it is possible to display the return mail icon 320 on the basis of the mail source address of the received mail (i.e. the attribute of the received mail). Therefore, if the return mail which is frequently transmitted to the source address of the received mail is included in the return mail information, it is possible to display the more appropriate return mail icon 320.

A computer program (or a computer readable recording medium recording thereon, in a non-transitory state, a computer program) for operating an information terminal makes the information terminal perform the aforementioned process. Examples of the computer readable recording medium includes a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

With regard to the embodiment explained above, the following additional statements are further disclosed.

### (Additional Statement 1)

An information terminal comprising:
a first controlling unit which controls a displaying unit to display a received mail icon indicating a received mail;
a second controlling unit which controls the displaying unit to display a return mail icon indicating a return mail to the received mail; and
a transmitting unit which transmits, when an operation of selecting a display area at which the return mail icon is displayed is performed, the return mail indicated by the return mail icon on which the operation is performed, to a source of the received mail indicated by the received mail icon.

### (Additional Statement 2)

The information terminal according to the additional statement 1, wherein

the transmitting unit transmits, when a drag operation toward the display area at which the return mail icon is displayed is performed after a display area at which the received mail icon displayed is selected, the return mail indicated by the return mail icon on which the operation is performed, to a source of the received mail indicated by the received mail icon on which the operation is performed.

### (Additional Statement 3)

The information terminal according to the additional statement 1 or 2, wherein

the first controlling unit controls the displaying unit to display a plurality of received mail icons each indicating a corresponding received mail, and

the transmitting unit transmits, when a drag operation toward the display area at which the return mail icon is displayed is performed after a display area at which one of the plurality of received mail icons is displayed is selected, the return mail indicated by the return mail icon on which the operation is performed, to a source of the received mail indicated by the one received mail icon.

### (Additional Statement 4)

The information terminal according to any one of the additional statements 1 to 3, wherein

the second controlling unit controls the displaying unit to display a plurality of return mail icons each indicating a corresponding return mail, and

the transmitting unit transmits, when a drag operation toward the display area at which one of the plurality of return mail icons is displayed is performed after a display area at which the received mail icon is displayed is selected, the return mail indicated by the one return mail icon on which the operation is performed, to a source of the received mail indicated by the received mail icon on which the operation is performed.

### (Additional Statement 5)

The information terminal according to the additional statement 1 or 2, wherein

the first controlling unit controls the displaying unit to display a plurality of received mail icons each indicating a corresponding received mail,

the second controlling unit controls the displaying unit to display a plurality of return mail icons each indicating a corresponding return mail, and

the transmitting unit transmits, when a drag operation toward the display area at which one of the plurality of return mail icons is displayed is performed after a display area at which one of the plurality of received mail icons is displayed is selected, the return mail indicated by the one return mail icon, to a source of the received mail indicated by the one received mail icon.

### (Additional Statement 6)

The information terminal according to any of the additional statements 1 to 5, further comprising:
a storing unit which stores a plurality of types of return mails; and
a selecting unit which selects at least one of the plurality of types of return mails stored in the storing unit, in accordance with attribute of the received mail, wherein
the second controlling unit controls the displaying unit to display at least one return mail icon indicating the at least one return mail selected by the selecting unit.

### (Additional Statement 7)

The information terminal according to the additional statement 6, wherein

the attribute of the received mail is a source address of the received mail.

### (Additional Statement 8)

The information terminal according to any of the additional statements 1 to 7, wherein

the information terminal further comprises a detecting unit which detects operation content, wherein

the transmitting unit transmits, when the detecting unit detects that an operation of selecting the display area at which the return mail icon is displayed is performed, the return mail indicated by the return mail icon on which the operation is performed.

### (Additional Statement 9)

An information processing method executed by an information terminal,

the information processing method comprising:
controlling a displaying unit to display a received mail icon indicating a received mail;
controlling the displaying unit to display a return mail icon indicating a return mail to the received mail; and
transmitting, when an operation of selecting a display area at which the return mail icon is displayed is performed, the return mail indicated by the return mail icon on which the operation is performed, to a source of the received mail indicated by the received mail icon.

### (Additional Statement 10)

A computer readable recording medium recording a computer program for operating an information terminal, wherein

the computer program makes the information terminal perform a process comprising:
process of controlling a displaying unit to display a received mail icon indicating a received mail;
process of controlling the displaying unit to display a return mail icon indicating a return mail to the received mail; and
transmitting, if an operation of selecting a display area at which the return mail icon is displayed is performed, the return mail indicated by the return mail icon on which the operation is performed, to a source of the received mail indicated by the received mail icon.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. An information terminal comprising:
a first controlling unit which controls a displaying unit to display a received mail icon indicating a received mail;
a second controlling unit which controls the displaying unit to display a return mail icon indicating a return mail to the received mail; and
a transmitting unit which transmits, when an operation of selecting a display area at which the return mail icon is displayed is performed, the return mail indicated by the return mail icon on which the operation is performed, to a source of the received mail indicated by the received mail icon.

2. The information terminal according to claim 1, wherein
the transmitting unit transmits, when a drag operation toward the display area at which the return mail icon is displayed is performed after a display area at which the received mail icon is displayed is selected, the return mail indicated by the return mail icon on which the operation is performed, to a source of the received mail indicated by the received mail icon on which the operation is performed.

3. The information terminal according to claim 1, wherein
the first controlling unit controls the displaying unit to display a plurality of received mail icons each indicating a corresponding received mail, and
the transmitting unit transmits, when a drag operation toward the display area at which the return mail icon is displayed is performed after a display area at which one of the plurality of received mail icons is displayed is selected, the return mail indicated by the return mail icon on which the operation is performed, to a source of the received mail indicated by the one received mail icon.

4. The information terminal according to claim 1, wherein
the second controlling unit controls the displaying unit to display a plurality of return mail icons each indicating a corresponding return mail, and
the transmitting unit transmits, when a drag operation toward the display area at which one of the plurality of return mail icons is displayed is performed after a display area at which the received mail icon displayed is selected, the return mail indicated by the one return mail icon on which the operation is performed, to a source of the received mail indicated by the received mail icon on which the operation is performed.

5. The information terminal according to claim 1, further comprising:
a storing unit which stores a plurality of types of return mails; and
a selecting unit which selects at least one of the plurality of types of return mails stored in the storing unit, in accordance with attribute of the received mail, wherein
the second controlling unit controls the displaying unit to display at least one return mail icon indicating the at least one return mail selected by the selecting unit.

6. An information processing method executable an information terminal,
the information processing method comprising:
controlling a displaying unit to display a received mail icon indicating a received mail;
controlling the displaying unit to display a return mail icon indicating a return mail to the received mail; and
transmitting, if an operation of selecting a display area at which the return mail icon is displayed is performed, the return mail indicated by the return mail icon on which the operation is performed, to a source of the received mail indicated by the received mail icon.

7. A computer readable recording medium recording a computer program for operating an information terminal, wherein
the computer program makes the information terminal perform a process comprising:
controlling a displaying unit to display a received mail icon indicating a received mail;
controlling the displaying unit to display a return mail icon indicating a return mail to the received mail; and
transmitting, if an operation of selecting a display area at which the return mail icon is displayed is performed, the return mail indicated by the return mail icon on which the operation is performed, to a source of the received mail indicated by the received mail icon.
